# EUROPEAN PATENT SPECIFICATION

(11) **EP 2 917 053 B1**
(45) Date of publication and mention of the grant of the patent: **12.12.2018**
(21) Application number: 13852705.6
(22) Date of filing: 30.10.2013
(51) Int. Cl.: B60G 15/00, B60G 13/00, B62D 33/06, F16F 9/54, F16F 1/38

(54) **MOUNTING DEVICE FOR VEHICLE**
MONTAGEVORRICHTUNG FÜR EIN FAHRZEUG
DISPOSITIF DE MONTAGE POUR VÉHICULE

(30) Priority: 06.11.2012 SE 1251257
(43) Date of publication of application: 16.09.2015
(73) Proprietor: Scania CV AB, 151 87 Södertälje (SE)
(72) Inventor: DECAYE, Simon, 121 55 Johanneshov (SE); ADOLFSSON, Malena, SE-168 68 Bromma (SE); HEDE, Martin, SE-152 30 Södertälje (SE); HARTLEY, Andrew, Darwen BB3 2HJ (GB)
(74) Representative: Scania CV AB
(86) International application number: PCT/SE2013/051270
(87) International publication number: WO 2014/074053

(56) References cited:
- EP-A1- 0 496 949
- EP-A1- 0 496 949
- DE-A1-102006 016 183
- DE-C1- 19 928 599
- DE-U- 1 938 455
- FR-A- 1 374 458
- FR-A1- 2 672 548
- FR-A1- 2 775 935
- US-A- 5 715 903
- US-A1- 2008 296 863
- US-B1- 7 118 302

## Description

### TECHNICAL FIELD

The present invention pertains generally to a mounting device to facilitate the installation of a component in a vehicle. The invention pertains specifically to a device for the mounting of, for example, a shock absorber in a vehicle's wheel suspension or for suspension of the vehicle's cabin, and is specifically intended for commercial heavy goods vehicles such as trucks and/or buses. The device is primarily intended for the mounting of shock absorbers with elastic elements for the absorption or reduction of vibrations in a vehicle. The invention also pertains to vehicles equipped with one or several mounting devices of the said type.

### BACKGROUND OF TECHNOLOGY

It is common today for vehicles to be manufactured with springs and shock absorbers combined in one device. Such devices may, for example, be used for cushioning of wheels or cabins and insulates the vehicle chassis or the cabin from road-induced vibrations. Usually, an elastic element in the form of an insulator or rubber bushing is arranged at the device's upper part, for example, and the function of which is to insulate the vehicle's chassis or cabin against noise and vibrations. The rubber bushing may be a so-called ring-eye bushing where the elastic element or the bushing, preferably made of a rubber material with the desired features, works by compression. The elastic element may also consist of a so-called top mount, which is usually bolted on to a bracket on the chassis or inside the cabin with vertical screws and where the elastic element works by elongation, which is advantageous for the reduction or insulation of noise and vibrations.

In order to install a top mount, the combined device spring/shock absorber must be compressed in its axial direction, i.e. so that the device is compressed in its longitudinal direction, in order for its to be in the correct mounting position and bolted. This is due to the fact that the vertical screws which are arranged in a top mount must, for packing reasons, pass below and past the cabin's welded bracket, for example. This method applies in particular where the lower shock absorber fixture must, for ergonomic reasons, be mounted first. This requirement that the spring/shock absorber must be compressed at the installation means that mounting and dismantling of the spring/shock absorber device is complex and time-consuming, in particular if the spring/shock absorber device contains coil springs which are difficult to compress. This means, in turn, that the mounting of the spring/shock absorber device is costly and thus makes the end product more expensive.

This problem has been known for a long time and different types of spring/shock absorbers have been proposed previously.

For example, DE202004009612 shows a shock absorber fixture for a vehicle comprising an outer housing with a central cavity or recess intended for a damping element and where a cross section of the outer housing has a wedge shape. The wedge shape is arranged to facilitate that the damping element does not come off. One problem is that the outer housing and the damping element function as one integrated device and as such does not facilitate the installation of the shock absorber inside the vehicle, since the shock absorber device must still be compressed in order to pass below a bracket and mainly vertical screw joints must be used.

Patent document DE4139377 shows another form of a shock absorber fixture for a vehicle where a damping element is arranged inside a curved shell or metal casing. The casing is equipped, around its periphery, with a flange, with which the shock absorbing fixture is mounted on the vehicle's chassis. Also in this solution, the outer housing and the damping element function as one integrated device and as such does not facilitate the installation of the shock absorber inside the vehicle, since the shock absorber device must still be compressed in order to pass below a chassis- or cabin-bracket and mainly vertical screw joints must be used.

Another solution is shown in the patent document EP1842701 where the shock absorber fixture consists of a damping element equipped with an outer casing which is U-shaped or concave. The objective of this shape is to facilitate placing an overload protection on the flanges, and not to facilitate the mounting of the shock absorber.

Another solution is show in the patent document DE19928599 which is related to an elastic bushing for a spring strut of a vehicle. The elastic bushing is surrounded by a housing comprising two housing parts attached to a bracket part connecting the spring strut to the vehicle chassis. The elastic bushing has an inner groove and is arranged to surround a bearing plate attached to an end of the spring strut. The objective of this invention is to create an elastic bushing arranged to minimize the mounting tolerances between the spring strut and the bracket part.

None of these prior art solutions include a bracket which eliminates the requirement that the device must be compressed in order to be mounted.
There is thus a need for a new and improved mounting device or bracket which facilitates the installation of components in a vehicle, such as a shock absorber, and which eliminates the disadvantages of prior art solutions and prior art. It is important that the mounting device facilitates and speeds up the installation of components during the manufacture of the vehicle and also during maintenance and that it is simple in its construction and structure. Such a solution should preferably not entail that additional components or weight are added to the vehicle, but instead make the vehicle cheaper to manufacture. It is also an advantage if the manufacturing process becomes less physically demanding and more ergonomic for the installer.

Prior art does not provide for any bracket which in a simple and cost-effective manner facilitates the installation of, for example, a spring/shock absorbing device and which facilitates that it may be inserted inside its bracket in the chassis or the cabin without having to be compressed because the screw joints may be fitted from the side.

### SUMMARY OF THE INVENTION

One objective of the invention is thus to resolve the above-mentioned problem and to propose/show a mounting device which in a simple and cost-effective manner facilitates the installation of, for example, a spring/shock absorbing device between the wheels/chassis or between the chassis/cabin in a vehicle.

Another objective of the invention is that the installation may be carried out without having to compress, press together, the device to be mounted, and for the mounting to be carried out in an ergonomically advantageous manner.

Yet another objective of the invention is to be able to use components existing in the market to a large extent in the construction in order to keep costs down.

Yet another objective of the invention is for the construction to consist of as few components as possible and thus to contribute to minimising the cost of components and the weight of the vehicle.

Yet another objective of the invention is that the construction may be implemented in a previously manufactured vehicle without having to make extensive changes to the same vehicle.

These and additional objectives and advantages are achieved according to the invention through a device in accordance with the features set out in the characterising section of patent claim 1.

The invention thus pertains generally to a mounting device to facilitate the installation of certain components in a vehicle and pertains specifically to a bracket for the mounting of a shock absorber in the vehicle's wheel suspension or the suspension of its cabin. The invention is primarily intended for commercial heavy goods vehicles such as trucks and/or buses. The bracket is specifically arranged for the mounting of shock absorbers equipped with at least one elastic element for the damping/reduction of vibrations arising in the vehicle during operation and which may be propagated to the vehicle's cabin and perceived as a comfort issue by the driver or passengers.

According to the invention, this is achieved by arranging a bracket in e.g. the vehicle's chassis or in the frame of the cabin, which is equipped with a wedge-shaped flange, and by arranging a bushing in the component to be mounted, e.g. a spring/shock absorbing device, where the bushing is equipped with a wedge-shaped groove. The bushing is arranged to be pinched or pressed into the bracket with a screw joint which may comprise a releasable clamp and two screws, for example.

This clamp may be mounted horizontally or in a horizontal plane, i.e. across the spring/shock absorber's main longitudinal direction or working direction. The clamp thus presses against the spring/shock absorbing device's top-mounted bushing and pins this into the desired position.

The elastic element in the bushing preferably consists of rubber or a similar material, and the clamp and bracket in the chassis or the cabin preferably consist of metal. Vibrations produced during the operation of the vehicle on a road and which are propagated via the wheels or the chassis are insulated or reduced thanks to the elastic element.

Despite the simple construction of the invention, the disadvantages of prior art are eliminated, and a simple fixture device is provided which facilitates and speeds up the mounting or dismantling of e.g. a spring/shock absorber in a vehicle. Mounting may also be carried out without the spring/shock absorbing device having to be compressed and which may easily be inserted into the bracket from the side. The tightening of the screws in the clamp is carried out essentially in a horizontal direction as well, which is very advantageous from an ergonomic point of view.

In addition, the invention entails that components existing in the market or prior art may be used, which makes the construction cost-effective and simpler to implement. Since the construction according to the invention consists of few components, the cost of included parts is also low and the construction is therefore cheap to realise.

The invention may also be implemented in an already manufactured vehicle without the need to carry out extensive construction amendments. Both the bracket and the spring/shock absorbing device may easily be replaced.

Further features and advantages of the invention are set out below in the more detailed description of the invention and the enclosed drawings and other patent claims.

### BRIEF LIST OF DRAWINGS

The invention is described in more detail below in some preferred embodiments, with the accompanying drawings.
**Figure 1** shows a perspective view of an end-mounted shock absorbing installation of a prior art type, here equipped with an air spring, with vertical assembly screws in the upper section of the device.
**Figure 2** shows a side view of a bracket, for example a cabin bracket, and a spring/shock absorbing device of a prior art type in a mounting phase where the spring/shock absorbing device is put into place by a movement and/or turning movement sideways, to the right in the figure.
**Figure 3** shows a perspective view of an uncovered and completely mounted shock absorbing installation according to the invention.
**Figure 4** shows a perspective view of a construction according to figure 3 according to the invention, but in an assembly phase.
**Figure 5** shows the invention according to figures 3 and 4 but from the side, with a clearer view of the wedge-shaped groove in the bushing, the wedge-shaped flange in the cabin bracket and the clamp which fits into the groove.
**Figure 6** shows a side view of the invention according to figures 3-5 but where the construction is in a final mounted position.
**Figure 7a** shows a vertical section through the bushing and the bracket according to the invention, where the wedge-shaped circular groove is arranged on the outer surface of the insulator/bushing, the jacket surface.
**Figure 7b** shows a vertical section through an alternative embodiment of the bracket according to the invention, and shows that the surfaces between the bushing and the bracket may be coated with a rubber layer to reduce the risk of noise and corrosion, and to address potential tolerance problems between components.
**Figure 8** shows a perspective view of an alternative embodiment of the bracket not according to the invention as claimed, which specifically affects the form of the bushing, in a mounting phase.
**Figure 9** shows a side view of the alternative embodiment of the bracket not according to the invention as claimed, according to figure 8, in a final mounted position.

### DESCRIPTION OF PREFERRED EMBODIMENTS

The invention thus pertains generally to a mounting device, to facilitate and speed up the mounting of certain components in a vehicle, such as a shock absorber or a spring/shock absorber device, for the damping or insulation of noise and vibrations which may arise in a vehicle during operation.

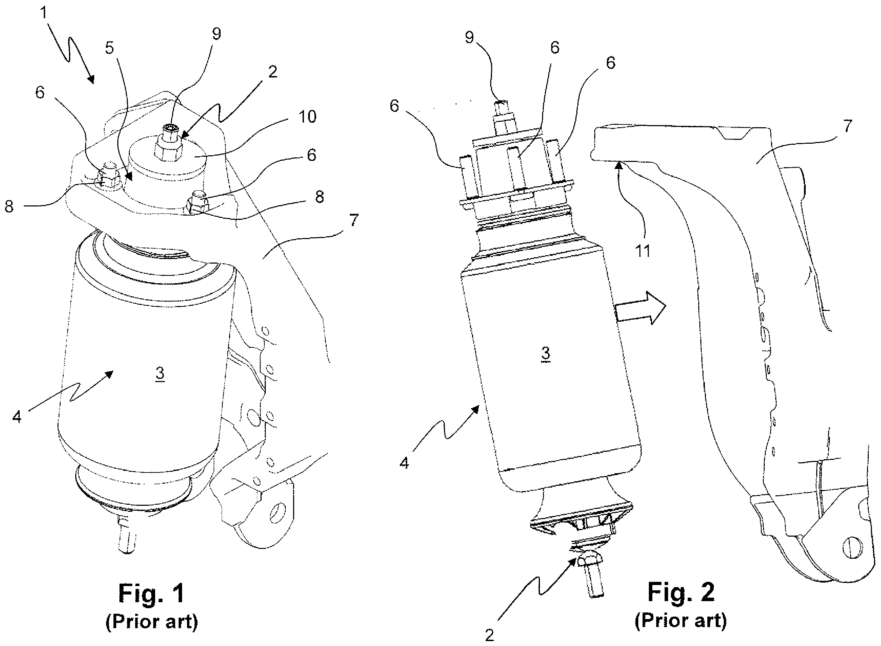

**Figure 1** shows a perspective view of an exposed and end-mounted shock absorber installation 1 of a prior art type. A shock absorber 2 is preferably combined with, or at least placed near, a spring 3 in order to achieve an optimal energy absorption and damping effect. The shock absorber 2 dampens energy and the spring 3 absorbs and stores energy. The shock absorbing installation 1 here consists of a shock absorber 2 combined with an air spring/air bellows 3 and is designed for a heavy goods vehicle such as a truck or a bus (not shown). Usually, at least four such spring/shock absorber devices 4 are used in a vehicle, one for each wheel of the vehicle. The spring/shock absorbing devices 4 may also be used to cushion and dampen vibrations in a vehicle cabin where a spring/shock absorber device 4 is placed in each corner of the cabin.

The vibrations arising during the operation of the vehicle are dampened or insulated primarily with elastic elements or bushings 5, made of a rubber material with desired features, arranged at least at one end section, here the upper one, of the shock absorber 2. In the figure, the upper part of the shock absorber 2, together with three screws 6 (of which one is hidden in the picture) are inserted in a bracket 7 arranged in the vehicle's chassis or cabin (not displayed) after which the screws 6 are tightened with nuts 8. The bushing 5 thus constitutes the link between the vehicle's chassis and the frame of the cabin and prevents vibrations in the vehicle's chassis from being propagated to the cabin in an unmitigated form. The central shaft 9 of the shock absorber 2 is equipped with a disk 10 which prevents excessive movements and deformations in the bushing 5.

**Figure 2** shows a side view of a prior art cabin bracket 7 and a prior art spring/shock absorbing device 4, according to figure 1, before mounting. In some vehicle constructions, for technical mounting reasons, the spring/shock absorbing device 4 must first be placed in its lower bracket (not shown). The spring/shock absorbing device 4 must thus be compressed, pressed together, so that the upper section with its vertical screws 6 and the central shaft 9 of the shock absorber may pass under the upper flange 11 of the cabin bracket 7 and be placed at the correct position by a sideways movement.

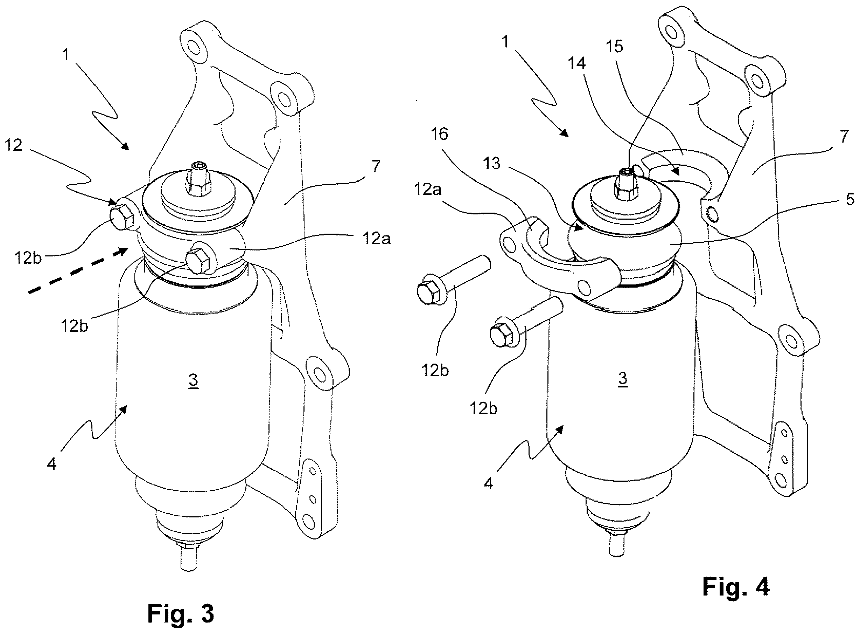

**Figure 3** shows a perspective view of a shock absorbing installation 1 according to the invention. The spring/shock absorbing device 4 is inserted sideways into a cabin bracket 7 (see the dashed arrow), in relation to the primary longitudinal or operational direction of the spring/shock absorbing device 4. The spring/shock absorbing device is end-mounted in the figure with a horizontally arranged screw joint 12, a clamp 12a with two screws 12b or similar, which are also mounted from the side of the insulator/bushing 5, across the primary longitudinal/operational direction of the spring/shock absorbing device 4.

**Figure 4** shows a perspective view of the shock absorbing installation 1, according to figure 3, but in a mounting phase. The top-mounted bushing 5 is designed with an essentially wedge-shaped groove 13 around its periphery. The cabin bracket 7 is equipped with an essentially semicircular recess 14, the edge of which forms a wedge-shaped flange 15. The clamp 12a is in turn curved and equipped with a similar wedge-shaped flange 16. The clamp 12a and the recess 14 in the cabin bracket 7 form an essentially circular opening in its final mounted position and its inner diameter is so adapted that the bushing 5 is completely enclosed and pinned. The wedge-shaped flange 15, 16 reaches, in the final mounted position, into the bushing's wedge-shaped groove 13 and fixes the bushing 5 and thus the spring/shock absorbing device 4 is held securely in place. The bushing 5 is unable to move vertically or horizontally. The cabin bracket 7 is screwed or welded on e.g. the cabin's framework.

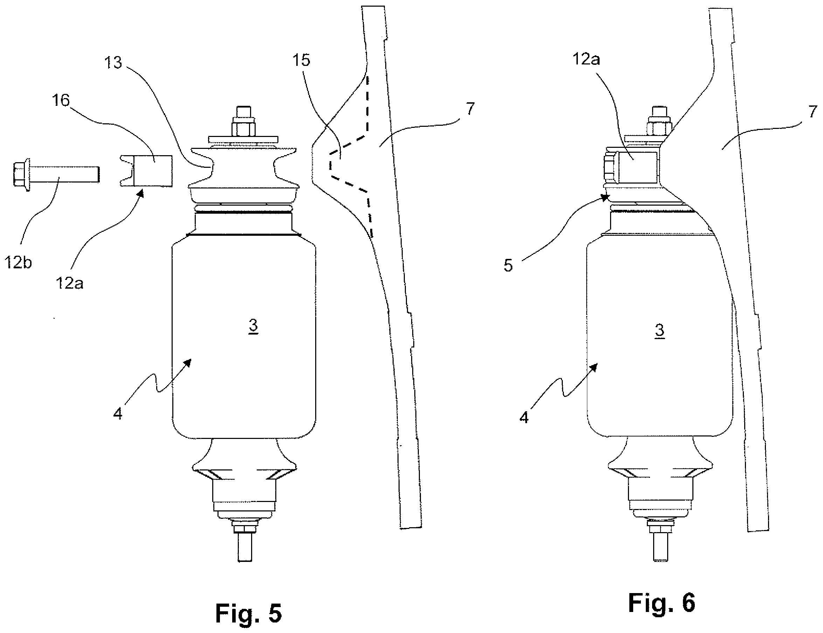

**Figure 5** shows the invention, according to figures 3 and 4, but from the side, with a clearer view of the wedge-shaped groove 13 in the bushing 5, the wedge-shaped flange 15 in the cabin bracket 7 and the wedge-shaped flange 16 in the clamp 12a.

**Figure 6** shows a side view of the invention according to figures 3-5 but in the final mounted position. The clamp 12a presses the bushing 5 into the cabin bracket 7.

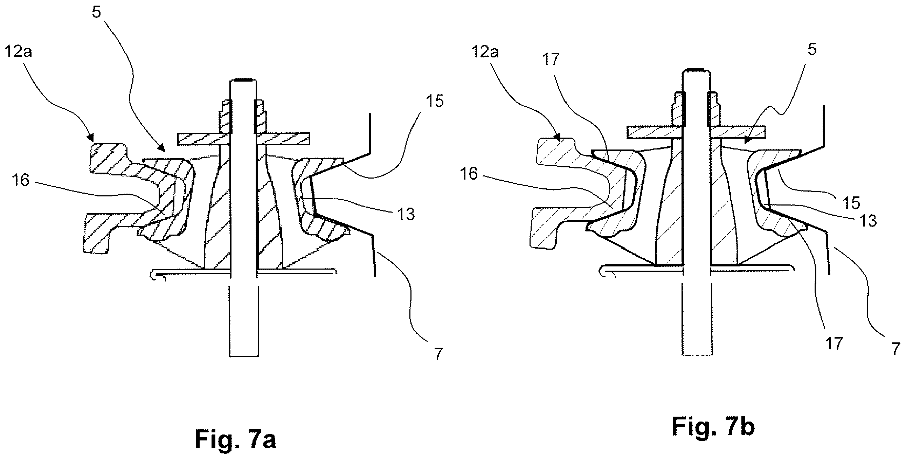

**Figure 7a** shows a principally vertical section through the device according to the invention, where the wedge-shaped groove 13 is arranged next to the outer surface of the bushing 5 and a wedge-shaped flange 15 is arranged in the cabin bracket 7 and a wedge-shaped flange 16 is arranged in the clamp 12a.

**Figure 7b** shows a vertical section through an alternative embodiment of the device according to the invention, where the wedge-shaped groove 13, alternatively the wedge-shaped flanges 15, 16 are equipped with a thin rubber layer 17 in order to reduce the risk of gaps and the effect of tolerance errors on the surface between the bushing 5 and the cabin bracket/clamp 7, 12a. A rubber layer 17 may also ensure an easier dismantling, since there is a risk that a metal/metal contact may get stuck over time due to corrosion, dirt, etc. The risk of noise is also reduced thanks to this rubber layer 17.

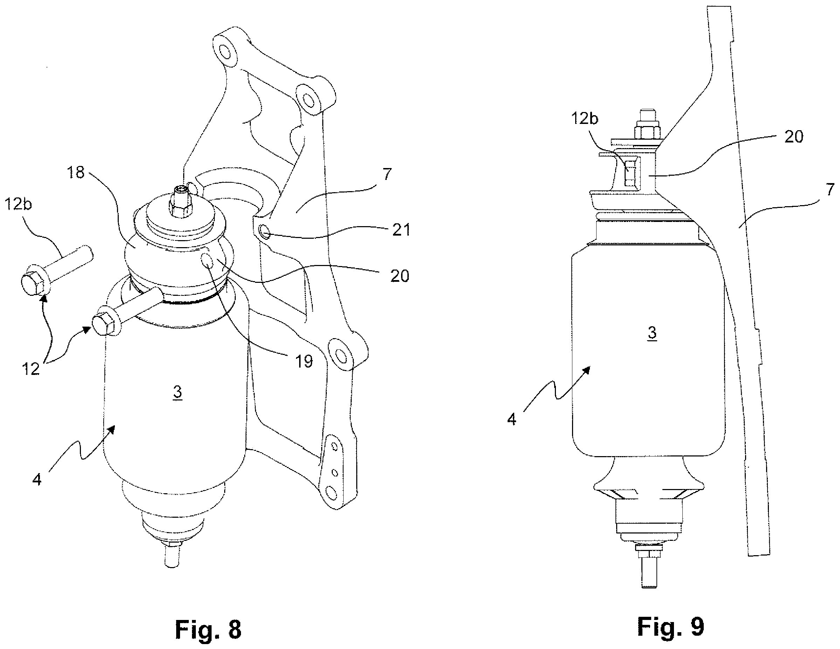

**Figure 8** shows a perspective view of an alternative embodiment of the mounting device not according to the invention as claimed, in a mounting phase. In this embodiment, the bushing 5 is equipped with a jacket 18 made of metal, which encloses the elastic element of the bushing 5, designed with two screw holes 19, arranged in two vertical flanges 20, the screw holes 19 of which fit the screw hole 21 in the cabin bracket 7.
**Figure 9** shows a side view of the alternative embodiment of the device not according to the invention as claimed, according to figure 8, in a mounting phase, where the vertical flanges 20 are shown. The description above is primarily intended to facilitate the understanding of the invention. The invention is therefore obviously not limited to the embodiments specified above, but other variants of the invention are also possible and conceivable within the protective scope of the following patent claims.

## Claims

1. Device for mounting of a combined spring and shock absorbing device (4) in a vehicle wherein said device for mounting comprising at least one elastic element in the form of a bushing (5) arranged at least at one end section (2) of the combined spring and shock absorbing device (4) and wherein the device for mounting further comprises a bracket fixed to the vehicle's chassis or cabin, and wherein said bushing (5) is arranged to be fixed to the bracket (7)
**characterised by that**
- the bushing (5) is designed with a wedge shaped groove (13) around its periphery,
- the bracket (7) is equipped with a semi-circular recess (14), the edge of which forms a wedge-shaped flange (15), and
- the bushing (5) is arranged to be fixed to the bracket (7) with the help of an essentially horizontal mountable screw joint (12) comprising a curved clamp (12a) equipped with a wedge-shaped flange (16) arranged to be bolted to the bracket (7), wherein the clamp (12a) and the recess (14) in the bracket (7) form an essentially circular opening in its final mounted position and its inner diameter is so adapted that the bushing (5) is completely enclosed and pinned.

2. Device according to patent claim 1,
**characterised by**
the fact that a screw joint (12) is arranged to press the bushing (5) against the bracket (7), essentially horizontally, across the spring/shock absorbing device's (4) longitudinal direction.

3. Device according to any of the previous patent claims,
**characterised by**
the fact that the elastic element of the bushing (5) is made of rubber.

4. Device according to any of the previous patent claims,
**characterised by**
the fact that the bushing (5) is essentially rotationally symmetric.

5. Device according to any of the previous patent claims, **characterised by**
the fact that the bushing (5) is equipped with a jacket (18) of metal.

6. Device according to patent claim 5,
**characterised by**
the fact that the bushing (5) and the jacket (18) constitute one integrated and continuous part.

7. Vehicle comprising a mounting device according to any of patent claims 1-6.

## Patentansprüche

1. Vorrichtung zum Anbringen einer kombinierten Feder- und Dämpfungsvorrichtung (4) an einem Fahrzeug, wobei die Vorrichtung zum Anbringen mindestens ein elastisches Element in Form einer Buchse (5) umfasst, die mindestens an einem Endabschnitt (2) der kombinierten Feder-und Dämpfungsvorrichtung (4) angeordnet ist, und wobei die Vorrichtung zum Montieren ferner eine Halterung umfasst, die am Chassis oder der Kabine des Fahrzeugs befestigt ist, und wobei die Buchse (5) dazu eingerichtet ist, an der Halterung (7) befestigt zu werden,
**dadurch gekennzeichnet, dass**
- die Buchse (5) eine keilförmige Nut (13) entlang ihrem Umfang ausbildet,
- die Halterung (7) mit einer halbkreisförmigen Aussparung (14) an dem Vorsprung ausgestattet ist, der einen keilförmigen Flansch (15) bildet, und
- die Buchse (5) derart angeordnet ist, dass sie an der Halterung (7) mithilfe einer im Wesentlichen horizontal montierbaren Schraubenverbindung (12) befestigbar ist, die eine gebogene Klammer (12a) umfasst, die mit einem keilförmigen Flansch (16) ausgestattet ist, der dazu eingerichtet ist, mit der Halterung (7) verschraubt zu werden, wobei die Klammer (12a) und die Aussparung (14) in der Halterung (7) eine im Wesentlichen kreisförmige Öffnung in final montierter Position bilden und innerer Durchmesser derart ausgebildet ist, dass die Büchse (5) vollständig umschlossen und befestigt ist.

2. Vorrichtung nach Anspruch 1,
**dadurch gekennzeichnet, dass**
die Schraubverbindung (12) dazu eingerichtet ist, die Buchse (5) gegen die Halterung (7), im Wesentlichen horizontal, quer zur Längsrichtung der Feder-/Dämpfungsvorrichtung (4) zu drücken.

3. Vorrichtung nach einem der vorhergehenden Ansprüche,
**dadurch gekennzeichnet, dass**
das elastische Element der Buchse (5) aus Gummi besteht.

4. Vorrichtung nach einem der vorhergehenden Ansprüche,
**dadurch gekennzeichnet, dass**
die Buchse (5) im Wesentlichen rotationssymmetrisch ist.

5. Vorrichtung nach einem der vorhergehenden Ansprüche,
**dadurch gekennzeichnet, dass**
die Buchse (5) mit einer Ummantelung (18) aus Metall ausgestattet ist.

6. Vorrichtung nach Anspruch 5,
**dadurch gekennzeichnet, dass**
die Buchse (5) und die Ummantelung (18) ein integriertes und zusammenhängendes Teil bilden.

7. Fahrzeug, umfassend eine Vorrichtung zum Montieren nach einem der Ansprüche 1-6.

## Revendications

1. Dispositif de montage d'un dispositif associant ressort et amortisseur (4) dans un véhicule, dans lequel ledit dispositif de montage comprend au moins un élément élastique en forme de coussinet (5) disposé au moins à une section d'extrémité (2) du dispositif associant ressort et amortisseur (4) et dans lequel le dispositif de montage comprend en outre un support fixé au châssis ou à la cabine du véhicule, et dans lequel ledit coussinet (5) est conçu pour être fixé au support (7)
**caractérisé en ce que**
le coussinet (5) est conçu avec une gorge cunéiforme (13) autour de sa périphérie,
- le support (7) étant équipé d'une alvéole semi-circulaire (14), dont l'extrémité forme une gorge cunéiforme (15), et
- le coussinet (5) est agencé pour être fixé au support (7) à l'aide d'un raccord à vis à montage essentiellement horizontal (12) comprenant une pince incurvée (12a) équipée d'une gorge cunéiforme (16) agencée pour être visée sur le support (7),
dans lequel le collier (12a) et l'alvéole (14) disposés dans le support (7) forment une ouverture essentiellement circulaire dans sa position définitive de montage et son diamètre intérieur est tel que le coussinet (5) est complètement fermé et goupillé.

2. Dispositif selon la revendication de brevet 1,
**caractérisé par**
**le fait que** le raccord de vis (12) est agencé pour presser le coussinet (5) contre le support (7), de manière horizontale spécifiquement, à travers le dispositif d'absorption de ressorts/chocs (4) dans le sens de la longueur.

3. Dispositif selon l'une quelconque des revendications de brevet précédentes,
**caractérisé par**
**le fait que** l'élément élastique du coussinet (5) est fait à base de caoutchouc.

4. Dispositif selon l'une quelconque des revendications de brevet précédentes,
**caractérisé par**
**le fait que** le coussinet (5) est essentiellement symétrique en rotation.

5. Dispositif selon l'une quelconque des revendications de brevet précédentes,
**caractérisé par**
**le fait que** le coussinet (5) est équipé d'une enveloppe (18) en métal.

6. Dispositif selon la revendication de brevet 5,
**caractérisé par**
**le fait que** le coussinet (5) et l'enveloppe (18) forment une pièce intégrée et continue.

7. Véhicule équipé d'un dispositif de montage conformément à l'une quelconque des revendications de brevet 1-6.
